# EUROPÄISCHE PATENTANMELDUNG

(11) **EP 2 101 125 A1**
(43) Veröffentlichungstag der Anmeldung: **16.09.2009**
(21) Anmeldenummer: 08004709.5
(22) Anmeldetag: 13.03.2008
(51) Int. Cl.: F24J 2/38, F24J 2/40

(54) **Verfahren und Anordnung zur Steuerung der Ausrichtung von Kollektoren, leittechnische Anlage und Kraftwerksanlage**

(71) Anmelder: SIEMENS AKTIENGESELLSCHAFT, 80333 München (DE)
(72) Erfinder: Kaestle, Hans, 72581 Dettingen (DE); Speh, Rainer, Dr., 64331 Weiterstadt (DE); Zimmer, Axel, 91085 Weisendorf (DE)

(57) **Zusammenfassung**

Die Erfindung betrifft ein Verfahren und eine entsprechende Anordnung zur Steuerung der Ausrichtung von Kollektoren eines Kraftwerks, bei dem die Sonnenstrahlung zur Energiegewinnung genutzt wird. In einer zentralen Steuereinheit (ZSE) werden am Ort des Kraftwerks Zeitkoordinaten ermittelt. Für jeden einzelnen Kollektor werden weiterhin die Ortskoordinaten innerhalb des Kraftwerks ermittelt. In Abhängigkeit dieser ermittelten Koordinaten werden für jeden Kollektor Steuersignale zentral berechnet, mit denen jeder Kollektor in eine gewünschte Position ausgerichtet wird.

## Beschreibung

Die Erfindung betrifft ein Verfahren und eine Anordnung zur Steuerung der Ausrichtung von Kollektoren eines Kraftwerks, bei dem die Sonnenstrahlung zur Energiegewinnung genutzt wird. Ferner betrifft die Erfindung eine Kraftwerksanlage und eine entsprechende leittechnische Anlage, bei der die Sonnenstrahlung zur Energiegewinnung genutzt wird

Im Rahmen der wirtschaftlichen Nutzung erneuerbarer Energien spielt die Nutzung der Sonnenenergie eine entscheidende Rolle. Die bekanntesten Konzepte hierbei stellen die Erzeugung elektrischer Energie mittels Solarzellen (Photovoltaik) und Solarthermie dar.

In einer Solarzelle findet aufgrund des photovoltaischen Effekts in Halbleitern eine direkte Umwandlung der im Sonnenlicht enthaltenen Strahlungsenergie in elektrische Energie statt. In manchen Photovoltaikanlagen werden Kollektoren den Solarzellen vorgeschaltet, um Halbleitermaterial einzusparen. Außerdem wird auf diese Weise eine höhere Energiedichte auf der Solarzelle erreicht und der Wirkungsgrad der Energieumwandlung gesteigert.

Ein solarthermisches Kraftwerk nutzt die solare Strahlungsenergie, um elektrische Energie zu produzieren. Es besteht aus einem so genannten Solarfeld, in dem die Strahlungsenergie in Wärmeenergie umgewandelt wird, und einem konventionellen Kraftwerksteil, in dem die Wärmeenergie in elektrische Energie umgewandelt wird. In der Regel ist das Solarfeld derart ausgestaltet, dass die Sonnenstrahlung mittels Kollektoren gebündelt und auf Absorber fokussiert wird. In den Absorbern wird ein stark wärmeleitendes Material erhitzt. Die im Absorber erzeugte Wärme wird über einen Wärmetauscher einem Wasser-Dampfkreislauf zum Antrieb einer Turbine zugeführt.

Als Kollektoren werden beispielsweise Paraboloidspiegel oder Parabolrinnen verwendet. Während in Paraboloidspiegeln die Sonnenstrahlung auf einzelne im Brennpunkt angebrachte Wärmeempfänger oder Absorber fokussiert wird, bestehen Parabolrinnen aus gewölbten Spiegeln, die das Sonnenlicht auf ein in der Brennlinie verlaufendes Absorberrohr bündeln. In einer Weiterentwicklung der Parabolrinnen werden so genannte Fresnel-Spiegel-Kollektoren verwendet. Bei ihnen wird das Sonnenlicht nach dem Prinzip der Fresnellinse über mehrere parallele, ungewölbte Spiegelstreifen auf ein Absorberrohr gebündelt. In einer weiteren Ausführungsvariante, einem Solarturmkraftwerk, richten sich Hunderte bis Tausende positionierter Spiegel (Heliostate) aus, um das Sonnenlicht auf einen zentralen Absorber (Receiver) zu fokussieren. Der Absorber ist auf einem so genannten Solarturm angeordnet und enthält das Wärmeträgermaterial. Als Wärmeträgermaterial im Absorber dienen im Allgemeinen Thermoöl, Wasser, Luft oder Salzschmelze.

In jeder solarthermischen Anlage oder Photovoltaikanlage mit Kollektoren muss zur Erzielung eines möglichst hohen Wirkungsgrades die Sonnenstrahlung jeweils optimal auf den Absorber fokussiert werden. Die Ausrichtung jedes Kollektors ist somit stets abhängig vom aktuellen Sonnenstand am Ort des Kollektors. Der Sonnenstand selbst wiederum hängt von Größen wie dem aktuellen Datum, der aktuellen Uhrzeit, dem Standort der Anlage und der genauen Position des Kollektors innerhalb der Anlage ab.

Die Ausrichtung der Kollektoren erfolgt heute durch komplexe Regelalgorithmen innerhalb jedes Kollektors. Ein Kollektor umfasst generell eine großflächige Optik wie beispielsweise einem Spiegel und eine mit der Optik verbundene mechanische Positionier- oder Stelleinheit. Diese mechanische Positionier- oder Stelleinheit - im Folgenden als Einheit bezeichnet - umfasst Elemente wie Umrichter, Motoren, Getriebe und entsprechende Regeleinheiten. Außerdem umfasst heute jede Einheit eine leistungsfähige Recheneinheit, die jeweils zur aktuellen Uhrzeit den Sonnenstand ermittelt. Auch der Standort jeder Einheit wird individuell ermittelt und zum optimalen

Fokussieren auf den Absorber berücksichtigt. Basierend auf den Ergebnissen der Recheneinheit gibt diese einen Sollwert für einen Winkel oder eine Position der Einheit vor und der Kollektor wird entsprechend ausgerichtet, indem zum Beispiel der zuvor berechnete Winkel für jede benötigte Achse eingestellt wird.

Aus dem Artikel "Neue Energien braucht die Welt" der INTERBUS Club-Zeitschrift "Interbus & applications", Ausgabe 04/2001 (Herausgeber: INTERBUS Club, D-32817 Blomberg) S. 10/11 ist bekannt, jeden Kollektor mit einer eigenen Steuerung auszurüsten, damit er dem Tagesgang der Sonne folgen kann. Hier wird ein modularer Aufbau mit dezentraler Intelligenz in einer solarthermischen Anlage vorgestellt.

Durch diese Individualisierung ist jede Einheit ein Unikat. Ein Nachteil dieser Einzellösungen besteht darin, dass im Fehlerfall jede Einheit jeweils komplett neu justiert und parametriert werden muss.

Es ist Aufgabe der Erfindung, ein einfacheres Verfahren zur Steuerung von Kollektoren in Anlagen, in denen die Sonnenstrahlung zur Energiegewinnung genutzt wird, anzugeben. Es soll ferner eine entsprechende Vorrichtung und Anlage angegeben werden.

Diese Aufgaben werden durch die Merkmale der unabhängigen Patentansprüche gelöst. Vorteilhafte Ausgestaltungen sind jeweils in den abhängigen Patentansprüchen wiedergegeben.

Der Grundgedanke der Erfindung besteht darin, statt einer Vielzahl von dezentralen Steuereinheiten, die jeweils im Feld bei den einzelnen Kollektoren angeordnet sind, eine zentralisiertes Leitsystem für die Gesamtheit der Kollektoren anzugeben. Das Leitsystem umfasst eine Steuereinheit, in der die gesamte Himmelsmechanik für den Standort des Kraftwerks hinterlegt ist. Eine zentrale Steuereinheit ermittelt die Zeitkoordinaten am Ort des Kraftwerks. Außerdem werden die Ortskoordinaten für jeden einzelnen Kollektor ermittelt und ebenfalls in der Einheit hinterlegt. In Abhängigkeit dieser Daten wird nun zentral ein Sollwert als Steuersignal für die Ausrichtung der einzelnen Kollektoren ermittelt. Dabei kann es sich um eine Stellvorgabe oder eine Winkelvorgabe des Kollektors handeln. Der berechnete Sollwert wird anschließend zu den Kollektoren übertragen und jeder Kollektor wird entsprechend der Sollwertvorgabe ausgerichtet, indem zum Beispiel der zuvor berechnete Winkel für jede benötigte Achse eingestellt wird.

Durch die Erfindung ergeben sich zahlreiche Vorteile. Durch die Verlagerung der Ermittlung der für den Standort des Kraftwerks relevanten Zeitkoordinaten in die zentrale Steuereinheit, entfällt eine Zeitsynchronisation aller einzelnen Einheiten, da die Zeit nur einmalig für die Berechnung des Sonnenstandes benötigt wird. Die Ortskoordinaten der einzelnen Einheiten sind durch den Aufbau des Kraftwerks festgelegt und somit stets verfügbar für die Berechnung der für die Ausrichtung der Kollektoren notwendigen Daten. Indem alle Daten zentral verwaltet und berechnet werden, entfällt die Notwendigkeit eines in die Kollektoren integrierten Steuermoduls. Stattdessen können für die Stelleinheiten der Kollektoren einfache und robuste Standardkomponenten verwendet werden, die in Serie gefertigt, montiert und ausgetauscht werden können. Dies erleichtert sowohl die Montage als auch die Wartung der einzelnen Einheiten. Durch die zentrale Datenhaltung werden Fehler im übergeordneten Leitsystem angezeigt und leichter behoben werden. Defekte Komponenten können einfach ausgetauscht werden. Weiterhin können im Falle einer Störung alle oder auch nur einzelne Kollektoren auf eine vorher festgelegte Stellung gefahren werden.

In einer Ausführungsvariante der Erfindung werden bei der Berechnung der Sollwertvorgabe die Daten von Sensoren wie beispielsweise Windmessgeräten oder Temperatursensoren berücksichtigt. Bei starker Windlast werden die Kollektoren in eine Stellung gefahren, für die die Windlast am geringsten ist. Auf diese Weise werden vorteilhaft Beschädigungen der Kollektoren verhindert. Denkbar ist ebenfalls, dass die Fokussierung durch Temperatursensoren angrenzend zum Wärmemittel überwacht wird.

In einer weiteren Ausführungsvariante der Erfindung wird eine die Steuerung der Kollektoren mit einer Leistungsregelung kombiniert, indem die Ausrichtung der Kollektoren auch entsprechend einer Leistungsvorgabe des Kraftwerks erfolgt. Die Kollektoren werden so entsprechend der benötigten Leistung fokussiert oder defokussiert. Auf diese Weise kann die zu liefernde Energiemenge des Kraftwerks direkt beeinflusst werden.

Die Erfindung wird nachfolgend anhand eines in der Zeichnung dargestellten Ausführungsbeispiels näher erläutert. Dabei zeigt

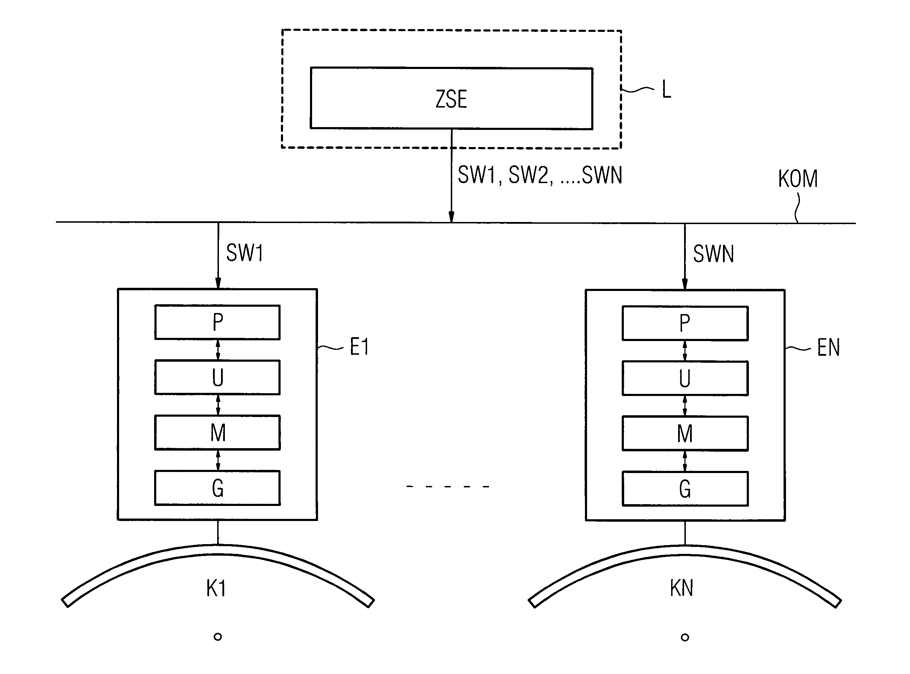

Fig. 1 eine schematische Darstellung der erfindungsgemäßen Anordnung zur Steuerung der Ausrichtung der Kollektoren K1 bis KN

Figur 1 zeigt eine stark vereinfachte schematische Darstellung einer Ausführungsvariante der Erfindung. Eine zentrale Steuereinheit ZSE ist über mindestens eine Kommunikationsverbindung KOM mit den Stell- und Positioniereinheiten E1 bis EN der entsprechenden Kollektoren K1 bis KN verbunden.

Die zentrale Steuereinheit ZSE ist hier als Teil einer übergeordneten Leittechnik dargestellt. Die Leittechnik erfüllt allgemeine leittechnische Aufgaben wie Prozessvisualisierung, Überwachung, Steuerung/Regelung und Datenerfassung. In einer anderen Ausführungsvariante ist die zentrale Steuereinheit ZSE als einzelnes, zentral angeordnetes Daten- und Berechnungsmodul angeordnet.

In der zentralen Steuereinheit ZSE sind die für den Ort des Kraftwerks relevanten Zeit - und Ortskoordinaten hinterlegt, die für die Fokussierung des Strahlenfeldes notwendig sind. Bei den Zeitkoordinaten handelt es sich um Datums- und Uhrzeitangaben. Es kann beispielsweise hierfür auch eine Jahrestabelle vorgesehen sein. Ferner sind die genauen Ortskoordinaten jedes Kollektors hinterlegt. Der Sonnenstand wird mittels eines Algorithmus bestimmt und weiterhin wird durch einfache Korrekturrechnungen des Sonnenstandes für die einzelnen Kollektoren ein Sollwert für eine beliebige Stellvorgabe der Stell- und Positioniereinheiten E1 bis EN berechnet.

Über das Kommunikationsmittel KOM werden die Steuersignale SW1 bis SWN zu den entsprechenden Stelleinheiten E1 bis EN übertragen. Als Kommunikationsmittel können je nach Aufbau der Kraftwerksanlage sowohl drahtlose Kommunikationsmittel als auch Bussysteme, einzelne Drahtverbindungen oder Kommunikationsfasern verwendet werden. Innerhalb der Stelleinheiten E1, E2, ... EN befinden sich Stellelemente wie Positionierer P, Umrichter U, Getriebe G oder Motoren M zur Ausrichtung der einzelnen Kollektoren. Die Verbindung zwischen Stelleinheit und Kollektor und die Art der Ausrichtung hängen von der Art des Kollektors ab. Parabolrinnen werden in der Regel nur einachsig nachgeführt, so dass eine einzelne Winkeleinstellung aufgebaut ist. Im Gegensatz hierzu sind Paraboloidspiegel häufig zweiachsig drehbar auf einem Gestell montiert, sodass hier zwei Winkeleinstellungen realisiert sind. Bei dem Steuersignal wird es sich demnach um unterschiedliche Sollwerte handeln. Es können Winkelvorgaben für jede benötigte Achse, die Anzahl der Motordrehungen und deren Richtung oder eine Anzahl an Impulsen für einen Impulszähler oder eine Kombination aus solch verschiedenen Werten sein.

Die Ausrichtung der Kollektoren ist nicht allein vom Sonnenstand abhängig. In einer Ausführungsvariante wird über eine übergeordnete Leistungsregelung der Kraftwerksanlage jeder Einheit mitgeteilt, ob fokussiert werden soll oder nicht. Weiterhin ist die Ausrichtung der Kollektoren von der Wetterlage abhängig. Bei extremen Stürmen und damit bei hoher Windlast fährt jede Einheit in eine Stellung, bei der die Einheit nicht beschädigt werden kann. Die Steuereinheit wird in diesem Fall aus Sicherheitsgründen und zur Vermeidung von Schäden mit unterschiedlichen Sensoreinheiten verbunden, um entsprechende Umweltdaten zu erfassen. Die Sensoren können je nach Bedarf zentral platziert oder auch verteilt angeordnet sein.

## Patentansprüche

1. Verfahren zur Steuerung der Ausrichtung von Kollektoren (K1, K2, ... KN) eines Kraftwerks, bei dem die Sonnenstrahlung zur Energiegewinnung genutzt wird,
**dadurch gekennzeichnet,**
**dass** in einer zentralen Steuereinheit (ZSE) Zeitkoordinaten (ZK) am Ort des Kraftwerks ermittelt werden,
**dass** Ortskoordinaten (OK) für jeden einzelnen Kollektor ermittelt werden,
**dass** in Abhängigkeit dieser ermittelten Koordinaten (ZK, OK) für jeden Kollektor (K1, K2, ... KN) Steuersignale (SW1, SW2, ... SWN) zentral berechnet werden, mit denen jeder Kollektor (K1, K2, ... KN) in eine gewünschte Position ausgerichtet wird.

2. Verfahren nach Anspruch 1,
**dadurch gekennzeichnet,**
**dass** ferner Umweltdaten mittels Sensoren ermittelt und bei der Berechnung der Steuersignale (SW1, SW2, ... SWN) der einzelnen Kollektoren (K1, K2, ... KN) berücksichtigt werden.

3. Verfahren nach Anspruch 1 oder 2,
**dadurch gekennzeichnet,**
**dass** die Steuerung der Kollektoren (K1, K2, ... KN) mit einer Leistungsregelung (LR) kombiniert wird, indem die Ausrichtung der Kollektoren auch entsprechend einer Leistungsvorgabe des Kraftwerks erfolgt.

4. Anordnung zur Steuerung der Ausrichtung von Kollektoren (K1, K2, ... KN) eines Kraftwerks zur Nutzung der Sonnenstrahlung zur Energiegewinnung,
**dadurch gekennzeichnet,**
**dass** die Anordnung eine zentrale Steuereinheit (ZSE) aufweist, die zur Ermittlung von Steuersignalen (SW1, SW2, ... SWN) zur Ausrichtung der einzelnen Kollektoren (K1, K2, ... KN) in Abhängigkeit von Zeitkoordinaten (ZK) am Ort des Kraftwerks und in Abhängigkeit von Ortskoordinaten (OK) der einzelnen Kollektoren (K1, K2, ... KN) ausgelegt ist.

5. Anordnung nach Anspruch 4,
**dadurch gekennzeichnet,**
**dass** die Anordnung ferner eine Sensoreinheit zur Übermittlung von Sensorwerten an die zentrale Steuereinheit umfasst.

6. Anordnung nach Anspruch 4,
**dadurch gekennzeichnet,**
**dass** die zentrale Steuereinheit ferner eine Einheit zur Leistungsregelung umfasst.

7. Anordnung nach einem der Ansprüche 4 bis 6,
**dadurch gekennzeichnet,**
**dass** die Anordnung als Teil einer leittechnischen Anlage (L) ausgestaltet ist.

8. Kraftwerksanlage, bei der die Sonnenstrahlung zur Energiegewinnung genutzt wird, und die eine Vielzahl von Kollektoren zur Bündelung der Sonnenstrahlung aufweist,
**dadurch gekennzeichnet,**
**dass** eine Anordnung zur Steuerung der Ausrichtung der Kollektoren (K1, K2, ... KN) des Kraftwerks nach einem der Ansprüche 4 bis 7 umfasst ist.

9. Kraftwerksanlage nach Anspruch 8,
**dadurch gekennzeichnet,**
**dass** die Kollektoren als Parabolrinne oder als ebene Spiegel oder als Parabolspiegel oder als Solarlinsen ausgestaltet sind.

10. Leittechnische Anlage für eine Kraftwerksanlage, bei der die Sonnenstrahlung zur Energiegewinnung genutzt wird, und die eine Vielzahl von Kollektoren zur Bündelung der Sonnenstrahlung aufweist,
mit einer zentralen Steuereinheit (ZS),
die mit den Kollektoren (K1, K2, ... KN) verbunden ist und in der ein Verfahren gemäß einem der Ansprüche 1 bis 3 abläuft.
